# EUROPEAN PATENT SPECIFICATION

(11) **EP 3 524 945 B1**
(45) Date of publication and mention of the grant of the patent: **30.10.2024**
(21) Application number: 19156301.4
(22) Date of filing: 08.02.2019
(51) Int. Cl.: G01G 19/12, G01G 23/37

(54) **ESTIMATION METHOD OF THE COMPATIBILITY OF A LOAD CARRIED BY A VEHICLE**
VERFAHREN ZUR BESTIMMUNG DER KOMPATIBILITÄT EINER LADUNG EINES FAHRZEUGS
PROCEDE D'ESTIMATION DE LA COMPATIBILITE DE LA CHARGE TRANSPORTEE PAR UN VEHICULE

(30) Priority: 09.02.2018 IT 201800002552
(43) Date of publication of application: 14.08.2019
(73) Proprietor: Iveco S.p.A., 10156 Torino (IT)
(72) Inventor: BENETTI, Antonio, 25010 SAN ZENO NAVIGLIO (BS) (IT)
(74) Representative: Studio Torta S.p.A.

(56) References cited:
- EP-A1- 2 172 413
- GB-A- 2 191 868
- US-A- 4 852 674
- US-A- 5 167 289

## Description

### TECHNICAL FIELD

The invention relates to a method to control the load transported by a vehicle, more in particular to a method to estimate the compatibility of the positioning of the load transported by a vehicle.

### BACKGROUND ART

It is known that the positioning of loads on a vehicle is an extremely important operation, as said loads directly affect the way in which the vehicle itself drives and the wear of different elements of the vehicle, such as suspensions or brakes.

For example, a load fulfilling the limit weight that can be transported by the vehicle, but positioned in a wrong manner can cause unbalances during some manoeuvres (bends, uphill paths) so as to lead to accidents or faults of the vehicle.

This problem turns out to be even more urgent when the load needs to be partially loaded and unloaded, in successive steps, along the path covered by the vehicle. Indeed, these loading/unloading operations change the position of the centre of gravity of the load acting upon the vehicle. The load, which at first was compatible, can then become incompatible.

An example of monitoring a load on the axle of a vehicle is disclosed in documents US5167289 A or US4852674 A. A further example of monitoring the load of a vehicle is provided in EP2172413 A1.

Therefore, there is a strong need to improve the control of the positioning of loads on a vehicle, in order to increase the driving safety as well as the duration of the elements of the vehicles.

### DISCLOSURE OF INVENTION

The object of the invention is to solve the technical problem described above.

The aforesaid object is reached by means of a method to evaluate the compatibility of a load on a vehicle as set forth in the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a schematic view of a vehicle comprising a load to be transported;
- figure 2 is a graph representing the evaluation of the compatibility of a load according to the method of the invention;
- figures 3A-3B are schematic views showing different load conditions of the vehicle of figure 1 in a longitudinal direction; and
- figures 4A-4B are schematic views showing different load conditions of the vehicle of figure 1 in a transversal direction.

### BEST MODE FOR CARRYING OUT THE INVENTION

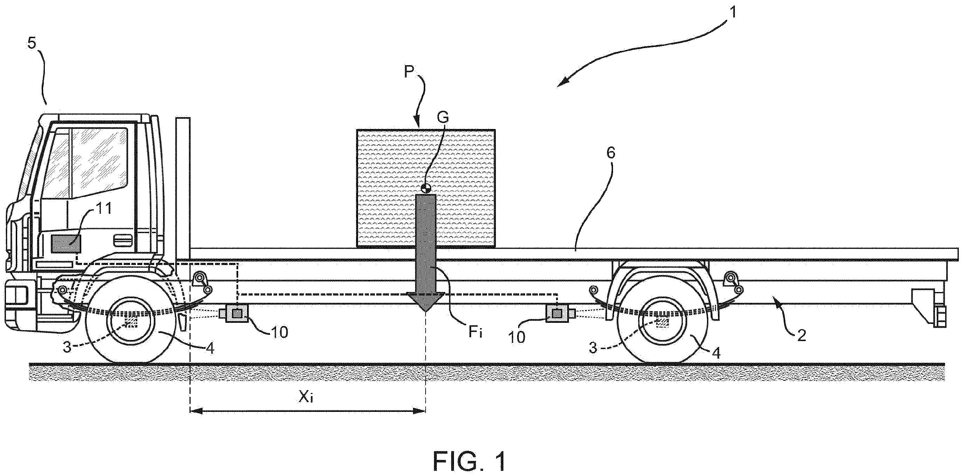

Figure 1 shows a vehicle 1, for example a heavy vehicle for the transportation of loads, basically comprising a frame 2, which is supported in a known manner by at least a pair of axles 3 provided with wheels 4, a cabin 5 and a loading platform 6 carried by the frame 2.

A load P can be fixed on the loading platform 6 in a known manner and the said load generates - on the loading platform 6 - an equivalent force F, applied to a centre of gravity G of the load P, arranged at a distance X, along a longitudinal axis of the vehicle 1, relative to a front edge of the loading platform 6 on which the load can be placed. By equivalent force F we mean the force resulting from the single weight forces generated by the single parts of the transported load P. For example, in case of a load P with a cubic shape and with a mass distributed in a uniform manner in the occupied volume, the equivalent force F is a single force having a value that is equal to the weight force of the load P and arranged at the centre of the diagonals of the face of the load, namely arranged on the vertical projection of the face of the centre of gravity G of the load.

The vehicle 1 further comprises, for each wheel 4 (or for each pair of twin wheels 4), a suspension 8. Hence, in the example described herein, the vehicle 1 comprises two axles 3 and, therefore, a pair of left and right front suspensions 8a and a par of left and right rear suspensions 8b. These suspensions 8a, 8b can be of a known type, for example mechanical suspensions comprising a leaf spring or air spring suspensions.

The vehicle 1 further comprises sensor means 10, which are configured to calculate the force acting upon an axle 3, more preferably on each hub of the wheel 4. These sensor means can be of different types, depending on the type of suspension 8.

For example, they can be optical sensors configured to evaluate the displacement of an element of the suspension, such as, for example, a video camera configured to measure the displacement of a leaf spring. By so doing it is possible to determine, based on the known shape and dimensions of the leaf spring (flexibility features), the force acting upon the suspension 8 depending on the displacement measured relative to a situation with a loadfree vehicle.

Moreover, the aforesaid sensor means could be load cells carried by the hub of the wheel 4 and configured to directly measure the force acting upon the hub. Finally, in case of suspensions 8 comprising air springs, the sensor could assess the pressure variation of the air spring in order to deduce the force acting upon the latter.

Furthermore, the vehicle 1 advantageously comprises an electronic unit 11 comprising connection means configured to connect the sensor means 10 to the electronic unit 11 and to acquire the values measured by them. The connection means can be physical connection means, such as electric/wired connections, or electromagnetic connection means, such as Wi-Fi systems. The electronic unit 11 preferably is the ECU of the vehicle 1.

The invention relates to a method configured to evaluate the compatibility of the load P relative to the features of the vehicle 1.

The method basically comprises the steps of:
- calculating characteristic values of the load P;
- displaying the characteristic values of the load P on an axes graph having the same measurement units of said characteristic values and representing at least one maximum load curve compatible with the features of the vehicle 1 according to said axes;
- estimating the fact that the load P displayed on the aforesaid graph is included in an area defined by the intersection of said at least one curve and the axes; and
- warning a user of the vehicle 1 on the state of compatibility of the load P.

These characteristic values of the load P can advantageously be the weight F and its position X, Y relative to a fixed position of the vehicle 1. Said position preferably is a longitudinal distance X relative to a fixed position, such as the front wall of the loading platform 6.

The aforesaid characteristic values (weight and position) can be calculated by means of known equations balancing forces and torques referred to a fixed point of the vehicle 1, knowing the force acting upon the axles 3 or upon the hubs of the wheels 4. Alternatively, sensors could be provided on the loading platform 6 so as to measure the weight and the relative position of the load P on the loading surface.

As already mentioned above, a graph is provided, which is an axes graph having the same measurement units of the previously measured characteristic values of the load. The graph displays at least one curve defining the load conditions P deemed to be compatible with the features of the suspensions of the vehicle 1 and with the limits set forth by traffic laws.

Said at least one curve can be one or more among the useful maximum load curve P of the vehicle, the saturation of at least one of the vehicle axes and the useful maximum load curve accepted to ensure a minimum load on an axis. As already mentioned above, said curves depend on the type of vehicle and can be defined through proper formulations based on the geometry of the vehicle and on the technical limits defined for the suspensions of the vehicle. The values of these calculations can advantageously be stored in the electronic unit 11.

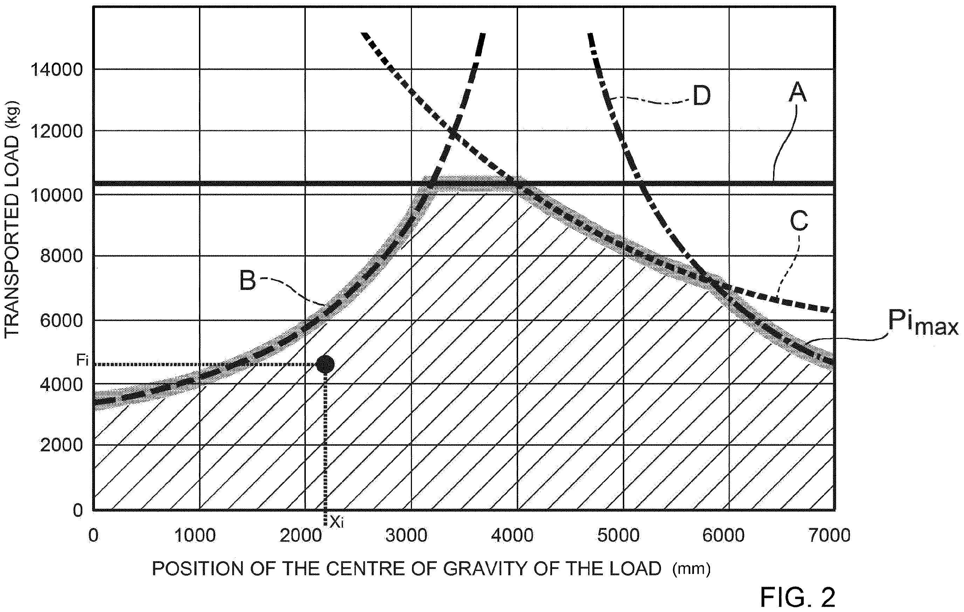

According to figure 2 and according to the example described above, the graph can display, on the abscissa, the position of the centre of gravity G of the load P in a longitudinal direction Xi and, on the ordinate, the value of the weight Fi of the load P.

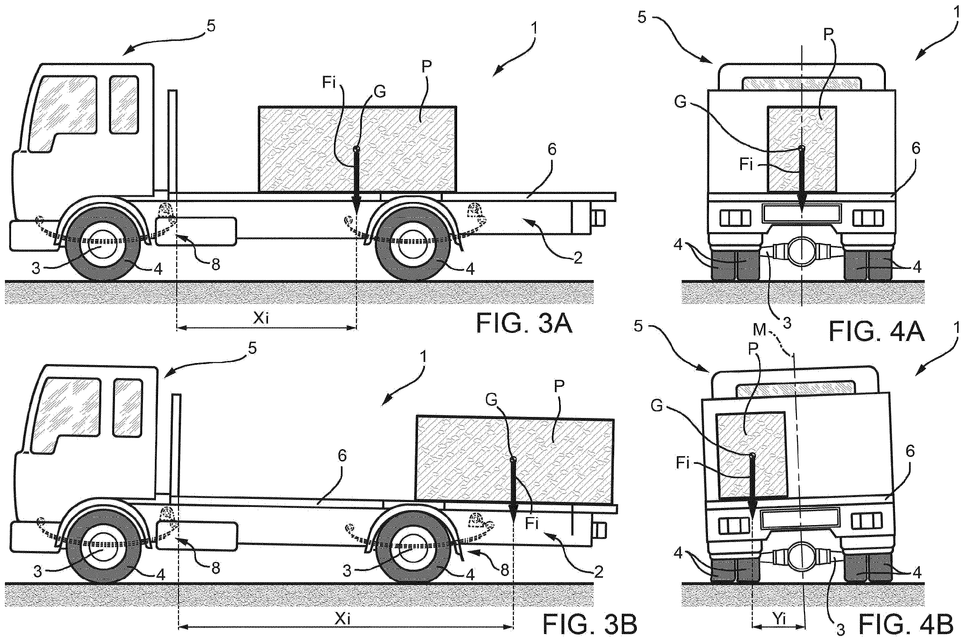

In the example shown in figure 2, the following curves are displayed:
- a first curve A relating to the maximum useful load that can be transported by the vehicle, which is deduced from the total ground weight accepted by the vehicle (known as "GVW", gross vehicle weight), subtracting the tare weight of the vehicle including the fittings (loading platform);
- a second curve B relating to the maximum admissible useful weight which determines a ground weight on the front axle of the vehicle equal to the maximum technically admissible value or "saturation curve" of the axle;
- a third curve C relating to the maximum admissible useful weight which determines, on the rear axle, a load equal to its maximum admissible load or "saturation curve" of the axle;
- a fourth curve D relating to the maximum useful weight P which ensures a minimum load value on the front axis relative to the total load (tare weight plus useful weight), usually a percentage of said load. Therefore, these curves evaluate the longitudinal compatibility of the load, according to figures 3A-3B. In particular, in figure 3A, the load is positioned in a substantially compatible manner, assuming that the weight Fi is smaller than the maximum useful weight of the vehicle (curve A) and respects the saturations of the front and rear axles 3 (curves A-B-C described above). In figure 3B, on the other hand, the load is not compatible because, even though the weight fulfils the conditions of total ground weight and saturation of the rear axle, its position Xi could generate problems concerning the minimum load required on the front axle relative to the total weight of the vehicle with its load (curve D).

According to the invention, the set of the aforesaid curves defines, with the axes of the graph, an area of compatibility of the load P, in other words the area subtended by the curve Pₘₐₓ, wherein said curve Pₘₐₓ is represented by the intersection of the aforesaid single maximum load curves.

The weight F and the position X of the centre of gravity G of the load P are then displayed in the graph and, in case the point defined by these coordinates is within the aforesaid compatibility area, the load - as positioned - is compatible with the features of the vehicle 1.

In case the load does not fall within the compatibility area, the driver is warned of the lack of compatibility and needs to re-position the load itself. The warning can take place through a light on the dashboard and/or through a sound.

The vehicle 1 could also comprise displaying means (not shown), such as for example a display or a portion of the control panel of the vehicle 1, which are connected to the electronic unit 11 and display the graph described above so as to clearly show to the driver how the load is positioned in the compatibility area and, hence, how he/she can/must change it during a trip with continuous loading/unloading operations or whether, since it is very close to the limit of one of the curves, the loads needs to be re-positioned.

As an alternative or in addition to the longitudinal control step described above, the method can comprise the step of evaluating the transversal compatibility of a load, a situation which is shown in figures 4A-4B.

In this case, the graph comprises at least the maximum transversal unbalance curve and the axes represent the weight F of the load P and the distance Y relative to a middle axis M of the vehicle 1.

This maximum transversal unbalance curve can be the maximum admissible difference between the forces borne by the right and left suspensions of the vehicle 1.

In case both the longitudinal and the transversal control step are necessary, the warning of the compatibility state to the user takes place only when both checks are valid.

The electronic unit 11 of the vehicle 1 advantageously comprises storing means, which are configured to store the values needed to carry out the method described above (for example, the weight of the load-less vehicle and the ground loads acting upon the different axles in this configuration, parameters of the suspensions, load curves, etc.), and processing means, which are configured to carry out the steps of the method described above and are electronically connected to the sensor means 10 and to the displaying means described above.

The operation of the method to evaluate the compatibility of the load P on a vehicle is the following.

After having positioned the load on the loading platform P, the sensor means 10 evaluate the reaction of the axle 3/hub of the wheels 4 and this value is acquired by the electronic control unit 11. Then, according to the method described above, the electronic unit 11 evaluates the compatibility of the load P and warns the driver (or displays the obtained graph), who consequently makes the decisions concerning the arrangement of the load P.

Owing to the above, the advantages of a method to evaluate the compatibility of a load P on a vehicle 1 according to the invention are evident.

The method evaluates in real time, measuring - by means of the sensors 10 - the force acting upon the axles 3 and, hence, mathematically deducing the position X, Y of the load P and its weight F, the compatibility of the transported load P.

This method can be implemented in any type of heavy vehicle with any type of suspension, simply changing the parameters stored in the electronic unit 11.

Furthermore, the use of displaying/warning means, used to inform the user of the compatibility of the load, could avoid dangerous situations or situations in which parts of the vehicle 1 are overloaded.

Finally, the method to evaluate the compatibility of the load P on a vehicle 1 according to the invention can be subjected to changes and variants, which, though, do not go beyond the scope of protection set forth in the appended claims.

For example, the physical quantities of the axes and the displayed curves can be different. In case of different axles, the graph would comprise the set of curves due to the combination of the different conditions defining the correct compatibility of the load.

Moreover, the suspensions 8 and/or the sensor means 10 designed to acquire the weights acting upon them can be of any known type.

The transversal control could be absent and additional compatibility checks could be present.

## Claims

1. An estimation method of the compatibility of a load (P) carried by a vehicle (1) comprising the following steps:
• calculating characteristic values of said load (P), wherein said characteristic values comprises the weight (F) of said load (P), and the position (X; Y) of said load (P) in respect to a fixed point of said vehicle (1);
• displaying said values of said load (P) on an axes graph having the same measurement units of said characteristic values, said graph representing at least one characteristic load curve (A, B, C, D) of said vehicle (1) according to said axes;
• estimating the fact that said load (P) displayed on said graph is included in an area defined by the intersection of said at least one load curve (A, B, C, D) and said axes; and
• warning a user of said vehicle (1) on the state of said compatibility of said load.
**characterised in that** said at least one load curve (A, B, C, D) comprises the useful maximum load curve P of the vehicle (A), the saturation of at least one of the vehicle axes (B; C) and the minimum load P required on one of the vehicle axes (D) and the transversal compatibility curve of said load.

2. The estimation method according to claim 1, **characterised in that** said weight (F) and said position (X, Y) are equivalent weight and position to said load (P).

3. The estimation method according to any one of the preceding claims, **characterised in that** the weight (F) and said position (X, Y) are calculated starting from the load acting on the axles (3) of said vehicle (1).

4. The estimation method according to claim 3, **characterised in that** said load acting on said axles (3) is calculated through the measurement of sensor means (10).

5. The estimation method according to one of the preceding claims, **characterised in that** said warning, is achieved via an audio/light indicator.

6. A vehicle comprising an electronic unit (11) comprising processing and storing means configured to carry out the estimation method according to any one of the preceding claims.

7. The vehicle according to claim 6, **characterised in that** it comprises displaying means configured to display said graph.

## Patentansprüche

1. Schätzverfahren für die Kompatibilität einer Last (P), die von einem Fahrzeug (1) getragen wird, umfassend die folgenden Schritte:
- Berechnung charakteristischer Werte der Last (P), welche charakteristischen Werte das Gewicht (F) der Last (P) und die Position (X; Y) der Last (P) in Bezug auf einen festen Punkt des Fahrzeugs (1) umfassen;
- Anzeige der Werte der Last (P) auf einem Achsdiagramm mit den gleichen Maßeinheiten wie die charakteristischen Werte, welches Diagramm zumindest eine charakteristische Lastkurve (A, B, C, D) des Fahrzeugs (1) entsprechend den Achsen darstellt;
- Schätzen, ob die Last (P), die in dem Diagramm dargestellt ist, in einer Fläche enthalten ist, die durch Schneiden zumindest einer Lastkurve (A, B, C, D) und der Achsen begrenzt wird, und
- Warnen eines Benutzers des Fahrzeugs (1) bezüglich des Zustands der Kompatibilität der Last,
**dadurch gekennzeichnet, dass** zumindest eine Lastkurve (A, B, C, D) die nützliche maximale Lastkurve (P) des Fahrzeugs (A), die Sättigung zumindest einer der Fahrzeugachsen (B; C) und die minimale Last (P), die für eine der Fahrzeugachsen (D) erforderlich ist, und die Kompatibilitätskurve der Last in Querrichtung umfasst.

2. Schätzverfahren gemäß Anspruch 1, **dadurch gekennzeichnet, dass** das Gewicht (F) und die Position (X; Y) äquivalentes Gewicht und Position zu der Last (P) sind.

3. Schätzverfahren gemäß einem der vorhergehenden Ansprüche, **dadurch gekennzeichnet, dass** das Gewicht (F) und die Position (X; Y) beginnend mit der Last, die auf die Achsen (3) des Fahrzeugs (1) wirkt, berechnet werden.

4. Schätzverfahren gemäß Anspruch 3, **dadurch gekennzeichnet, dass** die auf die Achsen (3) wirkende Last durch Messung mit Sensormitteln (10) berechnet wird.

5. Schätzverfahren gemäß einem der vorhergehenden Ansprüche, **dadurch gekennzeichnet, dass** die Warnung durch eine Audio-/Lichtanzeige erreicht wird.

6. Fahrzeug, umfassend eine elektronische Einheit (11), umfassend Verarbeitungs- und Speichermittel, ausgebildet zur Durchführung des Schätzverfahrens gemäß einem der vorhergehenden Ansprüche.

7. Fahrzeug gemäß Anspruch 6, **dadurch gekennzeichnet, dass** es Anzeigemittel umfasst, dazu ausgebildet, das Diagramm anzuzeigen.

## Revendications

1. Procédé d'estimation de la compatibilité d'une charge (P) transportée par un véhicule (1) comprenant les étapes suivantes :
• le calcul des valeurs caractéristiques de ladite charge (P), lesdites valeurs caractéristiques comprenant le poids (F) de ladite charge (P) et la position (X ; Y) de ladite charge (P) par rapport à un point fixe dudit véhicule (1) ;
• l'affichage desdites valeurs de ladite charge (P) sur un graphique à axes ayant les mêmes unités de mesure que lesdites valeurs caractéristiques, ledit graphique représentant au moins une courbe caractéristique de charge (A, B, C, D) dudit véhicule (1) selon lesdits axes ;
• l'estimation du fait que ladite charge (P) affichée sur ledit graphique est incluse dans une zone définie par l'intersection de ladite au moins une courbe de charge (A, B, C, D) et desdits axes ; et
• l'avertissement d'un utilisateur dudit véhicule (1) de l'état de ladite compatibilité de ladite charge.
**caractérisé en ce que**
ladite au moins une courbe de charge (A, B, C, D) comprend la courbe de charge maximale utile P du véhicule (A), la saturation d'au moins un des axes du véhicule (B ; C) et la charge minimale P requise sur un des axes du véhicule (D) et la courbe de compatibilité transversale de ladite charge.

2. Procédé d'estimation selon la revendication 1, **caractérisé en ce que** ledit poids (F) et ladite position (X, Y) sont équivalents au poids et à la position de ladite charge (P).

3. Procédé d'estimation selon l'une quelconque des revendications précédentes, **caractérisé en ce que** le poids (F) et ladite position (X, Y) sont calculés à partir de la charge agissant sur les essieux (3) dudit véhicule (1).

4. Procédé d'estimation selon la revendication 3, **caractérisé en ce que** ladite charge agissant sur lesdits essieux (3) est calculée par l'intermédiaire de la mesure des moyens de détection (10).

5. Procédé d'estimation selon l'une des revendications précédentes, **caractérisé en ce que** ledit avertissement est effectué au moyen d'un indicateur audio/lumineux.

6. Véhicule comprenant une unité électronique (11) comprenant des moyens de traitement et de stockage configurés pour mettre en œuvre le procédé d'estimation selon l'une quelconque des revendications précédentes.

7. Véhicule selon la revendication 6, **caractérisé en ce qu'**il comprend des moyens d'affichage configurés pour afficher ledit graphique.
